# EUROPEAN PATENT APPLICATION

(11) **EP 1 361 424 A2**
(43) Date of publication of application: **12.11.2003**
(21) Application number: 03010274.3
(22) Date of filing: 07.05.2003
(51) Int. Cl.: G01N 21/31, G01N 33/00, G01N 21/39, G01J 3/42

(54) **Method and apparatus for quantitatively measuring dioxin homologues and isomers by a doppler-free laser spectroscopy**

(30) Priority: 07.05.2002 JP 2002131672
(71) Applicant: Kobe University, Kobe-city Hyogo Pref. (JP)
(72) Inventor: Kato, Hajime, Nara City, Nara Pref. (JP)
(74) Representative: Henkel, Feiler, Hänzel

(57) **Abstract**

While a Doppler-fee absorption spectrum of an iodine molecule and an etalon mark are obtained, the thus measured Doppler-free two-photon absorption spectrum of the mixed sample of the homologues and isomers of the dioxin to be quantitatively analyzed is compared with that as analytical curves with respect to locations and intensities of spectrum peaks, kinds and contents of the homologues and isomers of the dioxin in the mixture are determined.

## Description

### Background of the Invention

### (1) Field of the Invention

The present invention relates to a method and an apparatus for quantitatively measuring dioxin homologues and isomers by laser spectroscopy. More specifically, the invention relates to the method and the apparatus for quantitatively measuring the dioxin homologues and isomers by a Doppler-free two-photon absorption spectroscopy.

### (2) Related Art Statement

Dioxins are produced in incomplete combustion when chlorine-based wastes such as polyvinyl chloride are burnt, and burnt ash, fly ash, etc. have been heretofore buried in excavation places. Such dioxin cause environmental contamination. Recently, it has been ascertained that the dioxins are carcinogenic and teratogenic. Thus, treatment of the dioxins has been attracting attentions from the standpoint of the disposal of air pollution and wastes. Herein, the dioxins are intended to include halogenated aromatic compounds such as polychlorinated biphenyl (PCB), polychlorinated phenol (PCP), polychlorinated p-dibenzodioxin (PCDD) and polychlorinated dibenzodioxin (PCDF).

Many of homologues and the isomers of the dioxins largely differ in toxicity. The dioxin homologues and isomers have been quantitatively analyzed by mass spectrometry after separating them in their mixtures with chromatography or the like. It has been proposed that the dioxin homologues and isomers are quantitatively analyzed by visible/ultraviolet light absorption and emitted light spectra or infrared light absorption/Raman scattering spectra.

However, the method in which the dioxin homologues and isomers are been quantitatively analyzed by mass spectrometry after separating them in their mixture with the chromatography or the like has a drawback that the chromatography analytical precision is low and a time required for the separation is long. Further, the method in which the dioxin homologues and isomers are quantitatively analyzed by visible/ultraviolet light absorption and emitted light spectra or the infrared light absorption/Raman scattering spectra has a low resolution power of the spectra and the method cannot accurately discriminate the above homologues and isomers from one another.

### Summary of the Invention

It is an object of the present invention to provide a method and an apparatus for quantitatively measuring dioxin homologues and isomers at high resolution by laser spectroscopy as they are without separating the dioxin homologues and isomers in their mixture.

The method for quantitatively measuring dioxin homologues and isomers by laser spectroscopy according to the present invention is characterized by comprising:
(1) dividing a laser beam having a wavenumber-tuned single-mode into three laser beam portions, and simultaneously measuring ① a Doppler-free two-photon absorption spectrum of a dioxins sample, ② a Doppler-free absorption spectrum of an iodine molecule and ③ an etalon mark with thus divided laser beam portions, respectively;
(2) determining absolute wavenumbers of spectrum peaks of the above ② with reference to a Doppler-free absorption spectra data list (published by JSPS, ISBN 4-89114-000-3), taking said absolute wavenumbers as standard ones and determining absolute wavenumbers of spectrum peaks of the above ① from differences in wavenumber from the standard spectrum peaks while the etalon mark in the above ③ is taken as a scale;
(3) measuring Doppler-free two-photon absorption spectra of homologues and isomers of the dioxin and polychlorinated biphenyls (PCBs) to be quantitatively analyzed, at various concentrations by (1) and (2) mentioned above, and preliminarily determining Doppler-free two-photon absorption spectra containing concentration-dependent data as analytical curves with respect to the homologues and isomers of the dioxins;
(4) measuring a Doppler-free two-photon absorption spectrum of a mixed sample of the homologues and isomers of the dioxin to be quantitatively analyzed, by the above method (1); and
(5) comparing the thus measured Doppler-free two-photon absorption spectrum of the mixed sample of the homologues and isomers of the dioxin to be quantitatively analyzed, with that as the analytical curve with respect to locations and intensities of spectrum peaks and determining kinds and contents of the homologues and isomers of the dioxin in the mixture.

In a preferred embodiment of the method for quantitatively measuring dioxin homologues and isomers by laser spectroscopy, an analytical accuracy is improved by effecting energy splitting through applying an external magnetic field and/or an external electric field to the dioxins sample in the above measurement (1).

The dioxin homologue and isomer laser spectroscopically quantitatively measuring apparatus according to the present invention is characterized by comprising;
(a) an optical resonator in which parallel reflecting plates at opposite ends are opposed to each other,
(b) a wavenumber-tunable single-mode laser unit connected to an incident end portion of the optical resonator via a beam splitter and adapted to emit single-mode laser beams of which wavenumbers are continuously changed,
(c) an iodine spectrum measuring unit and (d) an etalon mark-measuring unit connected to said wavenumber-tunable single-mode laser unit via said beam splitter,
(e) a resonator controller connected to an emitting end portion of the optical resonator and adapted to automatically control a length of the resonator so as to satisfy a resonating condition following sweeping of wavenumbers,
(f) an emitted light detector for detecting a light emitted through resonance inside a sample cell placed inside the optical resonator, and
(g) an automatic control measuring unit, said iodine spectrum measuring unit, said etalon mark measuring unit and said optical detector being connected to an input side of the automatic control measuring unit, said wavelength-tunable single-mode laser being connected to an output side of the automatic control measuring unit, said automatic control measuring unit (i) effecting controlling and wavenumber-sweeping of the wavenumber-tunable single-mode laser, (ii) receiving outputs from said emitted light detector, outputs from said etalon mark measuring unit and outputs from said iodine spectrum-measuring unit, and (iii) measuring and recording ① a Doppler-free two-photon absorption spectrum of each of homologues and isomers of the dioxin to be quantitatively analyzed, which spectrum contains concentration-dependent data as analytical curves obtained by measurement at various concentrations, ② a Doppler-free absorption spectrum of an iodine molecule to be used for determining absolute wavenumbers, and ③ an etalon mark as a scale for measuring relative wavenumbers, (iv) said automatic control measuring unit comparing the thus measured Doppler-free two-photon absorption spectrum of the mixed sample of the homologues and isomers of the dioxin to be quantitatively analyzed, with that as the analytical curve with respect to locations and intensities of spectrum peaks and (v) determining kinds and contents of the homologues and isomers of the dioxin in the mixture.

A preferred embodiment of the dioxin homologue and isomer laser spectrometer according to the present invention is characterized by further comprising a unit to apply an external magnetic field and/or external electric field to the dioxins sample in the above measurement (iii) for improving an analytical accuracy by effecting energy splitting.

The Doppler-free two-photon absorption spectrometry using the optical resonator can realize extremely high resolution with high sensitivity, so that the dioxin homologues and isomers in their mixture can be quantitatively analyzed by measuring the Doppler-free two-photon absorption spectra thereof as they are without separating them from their mixture.
These and other objects, features and advantages of the invention will be appreciated when taken in conjunction with the attached drawings, with the understanding that some modifications, variations or changes could be easily made by the skilled person in the art to which the invention pertains.

### Brief Description of the Invention

For a better understanding of the invention, reference is made to the attached drawings, wherein:
Fig. 1 schematically illustrates a Doppler-free two-photon absorption spectrometer according to the present invention.
Figs. 2 (a), 2(b) and 2(c) show Doppler-free two-photon absorption spectra of the dioxin isomers A and B at a known concentration (1 pg/m³) and that of a mixture of the dioxin isomers A and B at unknown concentrations, respectively.
Figs. 3(a), 3(b) and 3(c) show an etalon mark, a Doppler-free iodine spectrum, and a Doppler-free two-photon absorption spectrum of a mixture of dioxins, respectively.

### Detailed Description of the Invention

In the following, the present invention will be explained in more detail.

### (1) Quantitative analysis of the dioxin homologues and isomers with the optical resonator according to the Doppler-free two-photon absorption spectroscopy

### (1-1) Optical resonator to be used the Doppler-free two-photon absorption spectroscopy

In the present invention, the Doppler-free two-photon absorption spectroscopy is practiced by using as an optical resonator a Fabry-Perot resonator having two reflecting plates opposed to each other. Inside the optical resonator, a sample cell is placed. The sample cell has a light-permeating window to be arranged at a Brewster angle relative to an optical path and an emitted light-measuring window oriented to the light-permeating window at right angles. Use of the optical resonator enhances the sensitivity because of increased intensity of the light inside the resonator. A gas is a collection of molecules ordinarily translationally moving in various directions, and its absorption spectrum has a given line width. This phenomenon is known as a widening of the line width due to the Doppler effect. Such a spectroscopy as not causing the widening of the spectrum is called the Doppler-free spectroscopy.

### (1-2) Adjustment of the optical resonator to be used in the Doppler-free two-photon absorption spectroscopy

An error signal is taken by utilizing a reflected light from the optical permeating window at the Brewster angle, and the length of the resonator is automatically controlled so that a resonance condition may be satisfied following to scanning in wavenumber.

### (1-3) Measurement of ① Doppler-free two-photon absorption spectra

As a function of the wavenumber of a wavenumber-tunable single-mode laser, the intensity of its corresponding light emission is determined.

### (1-4) Calibration of the wavenumber at a superhigh precision

②: The Doppler-free absorption spectrum of the iodine molecule and ③: the etalon mark are simultaneously measured by using a part of the wavenumber-tunable single-mode laser beam, and the absolute wavenumber of ①: the Doppler-free two-photon absorption spectrum of the dioxin sample is wavenumber-calibrated.

That is, the wavenumber-tunable single-mode laser beam is divided into three laser beam portions (for example, 1W laser beam is divided into 0.8W, 0.1W and 0.1W laser beam portions, respectively), and ①: a Doppler-free two-photon absorption spectrum of a dioxin homologue/isomer sample, ②: a Doppler-free absorption spectrum of an iodine molecule and ③: an etalon mark are measured simultaneously with thus divided laser beam portions, respectively. The etalon mark gives an accurate scale for relative wavenumbers, which scale serves to determine the absolute wavenumbers of the iodine spectrum (as to what wavenumber region is being measured). The absolute wavenumbers of the spectrum curve of the above ② (as to what wavenumber region is being measured) is determined with reference to the Doppler-free spectrum data (published by JSPS, ISBN 4-89114-000-3). When the absolute wavenumbers of the spectrum curve in ② can be determined, the absolute wavenumber of the spectrum curve in ① can be determined based on the scale of ③.

Doppler-free two-photon absorption spectra are measured at various concentrations with respect to the homologues and the isomers of the dioxins and polychlorinated biphenyls (PCSs) to be measured are measured by the method of (1-3) to (1-4), and the Doppler-free two-photon absorption spectrum containing concentration-dependent data is preliminarily determined as an analytical curve for each of the homologues and the isomers of the dioxins and the polychlorinated biphenyls (PCBs).

(1-5) With respect to a mixed sample of the homologues and the isomers of the dioxins and the polychlorinated biphenyls (PCBs) to be quantitatively measured, a Doppler-free two-photon absorption spectrum is measured according to the method in (1-3) to (1-4). By comparing the measured Doppler-free two-photon absorption spectrum of the mixed sample with those as the analytical curves with respect to the locations and the intensities, the kinds and the contents of the homologues and the isomers of the dioxins and the polychlorinated biphenyls (PCBs) in the mixture are determined.

Each of the isomer samples, the homologue samples, and the mixed sample of the homologues and the isomers to be quantitatively measured is introduced into the sample cell at a given concentration and a diluted rate after being vaporized.

### (1-6) External magnetic field and electric field

According to the present invention, the performance of wavenumber-tunable laser for a super-narrow width spectroscopy can be fully utilized, and the spectra can be fully measured at high resolution by the Doppler-free two-photon absorption method. When the high resolution spectroscopy according to the present invention is used, the energy splitting due to the external magnetic field or the external electric field can be definitely measured, which can enhance the analytical accuracy. Such energy splitting has been unable to be measured by the conventional methods.

### (Embodiments)

(2) Apparatus for quantitatively measuring the homologues and the isomers of the dioxins and the polychlorinated biphenyls (PCBs) according to the Doppler-free two-photon absorption spectroscopy with use of the optical resonator.

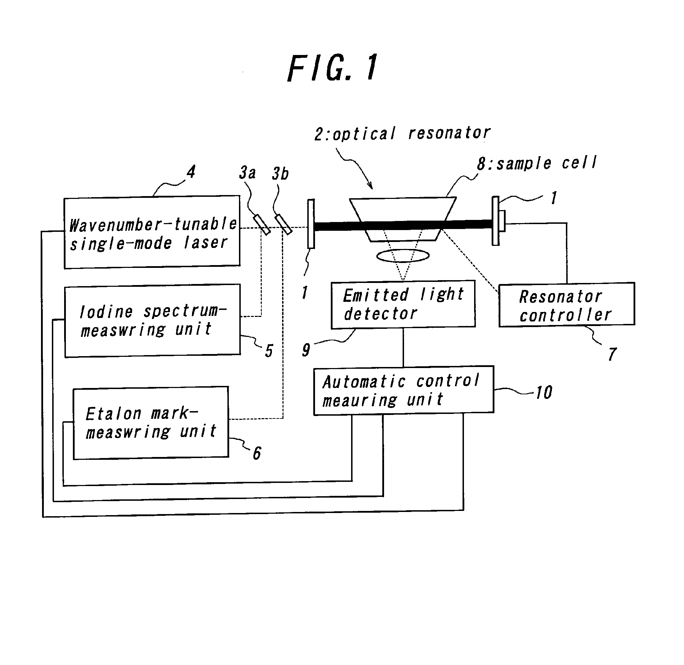

A Doppler-free two-photon absorption spectroscopic apparatus for the homologue/isomer mixtures of the dioxins and the polychlorinated biphenyls (PCBs) according to the present invention is shown in Fig. 1. The dioxin homologue/isomer laser spectroscopic analyzer includes an optical resonator 2 having parallel reflecting plates 1 opposed to each other at opposite ends, a wavenumber-tunable single-mode laser unit 4 connected to an incident end portion of the optical resonator 2 via beam splitters 3a, 3b, and an iodine spectrum-measuring unit 5 and an etalon mark-measuring unit 6 connected to the wavenumber-tunable single-mode laser unit 4 via the beam splitter(s) 3b. The wavenumber-tunable single-mode laser unit 4 generates single-mode laser beams continuously varied in wavenumber through oscillation. A resonator controller 7 takes an error signal by utilizing a reflected light from a light-permeating window at a Brewster angle, and automatically control the length of the resonator so as to satisfy the resonating condition following to wavenumber sweeping.

The optical resonator controller 7 is connected to an emitting portion of the optical resonator 2. A sample cell 8 is placed inside the optical resonator 2. The sample cell has two light-permeating windows arranged each at a Brewster angle α relative to an optical path and an emitted light-measuring window arranged at right angles to the light-permeating window. The light, which is generated by resonance inside the sample cell, emits through the emitted light-measuring window, and is measured with an emitted light detector 9. An input side of an automatic control measuring unit 10 is connected to the emitted light detector 9, and an output side of the wavenumber-tunable single-mode laser unit 4. The iodine spectrum-measuring unit 5 and the etalon mark-measuring unit 6 are connected to an input side of the automatic control measuring unit 10.

The automatic control measuring unit 10 controls and wavenumbersweeps the wavenumber-tunable single-mode laser. This measuring unit 10 takes outputs from the etalon-measuring unit 6, outputs from the iodine spectrum-measuring unit 5 and outputs from the emitted light detector 9. The measuring unit 10 thus measures and records ①: Doppler-free two-photon absorption spectra of homologues and isomers of the dioxins to be quantitatively analyzed, which spectra contain concentration-dependent data as analytical curves obtained at various concentrations, ②: Doppler-free absorption spectra of an iodine molecule to be used for determining an absolute wavenumbers, and ③: an etalon mark as a scale for measuring relative wavenumbers.

The automatic controller 10 compares the thus measured Doppler-free two-photon absorption spectrum of the mixed sample of the homologues and isomers of the dioxin to be quantitatively analyzed with that as the analytical curve with respect to the locations (absolute wavenumbers) and the intensities of the spectrum curves, and then determining kinds and contents of the homologues and isomers of the in the mixture.

Measurements of the Doppler-free two-photon absorption spectra as analytical curves of the dioxin homologues and isomers and measurements of the Doppler-free two-photon absorption spectra of the dioxin homologues and isomers in a given mixture are carried out by introducing the wavenumber-tuned single-mode laser beams into the optical resonator, inputting the laser beams into the sample cell and detecting the oscillation-generated light beams with the emitted light detector 9.

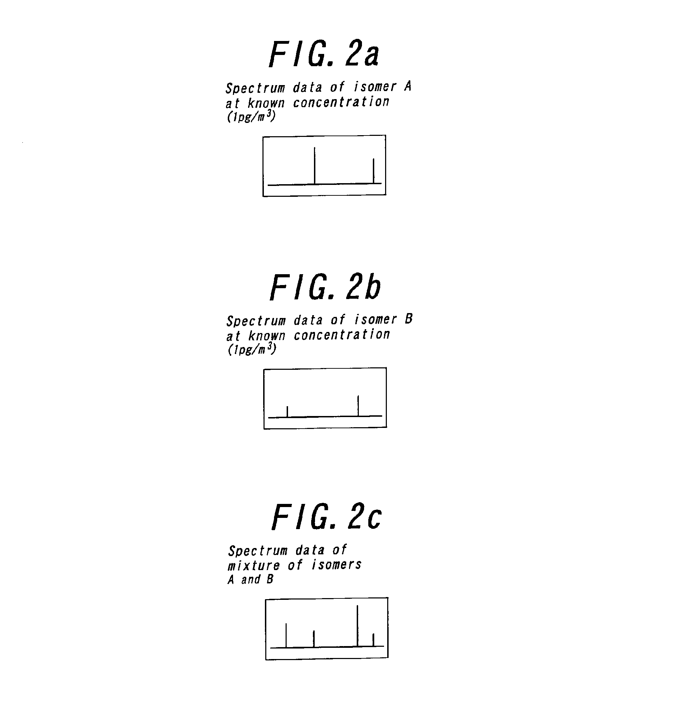

Fig. 2(a) to Fig. 2(c) explain a method for quantitatively measuring the dioxin homologues and isomers according to the laser spectroscopic analytical method of the present invention. Figs. 2(a) to Fig. 2(c) show Doppler-free two-photon absorption spectra of a known concentration (1 pg/m³) of the dioxin isomers A and B and a mixture of unknown concentrations of the dioxin isomers A and B, respectively. The concentrations of the isomers A and B in the mixture can be determined as 0.5 pg/m³ and 2.0 pg/m³, respectively, from the intensities of the spectra of the Doppler-free two-photon absorption spectrum curve in Fig. 2(c) with reference to those in Figs. 2(a) and 2(b).

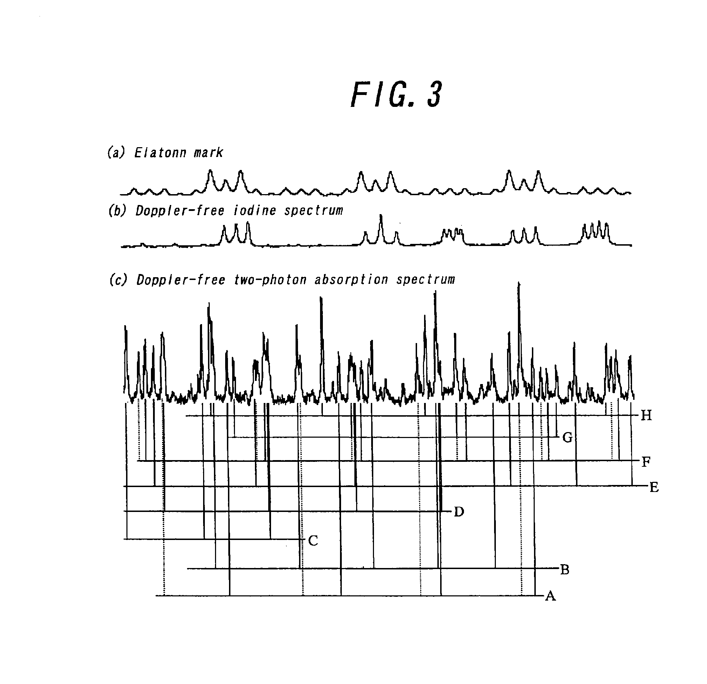

Fig. 3 shows a Doppler-free two-photon absorption spectrum of a mixture of unknown dioxins. Based on the measuring principle in Figs. 2(a) to 2(c), it is possible to determine the existence of dioxin isomers A, B, C, D, E, F, G, H, --- in the mixture from a Doppler-free two-photon absorption spectrum in Fig. 3(c) and also to determine their concentrations from intensities of the spectrum with reference to Doppler-free two-photon absorption spectra of known concentration(s) of the dioxin isomers A, B, C, D, E, F, G, H, --- (not shown).

## Claims

1. A method for quantitatively measuring dioxin homologues and isomers by laser spectroscopy, comprising:
(1) dividing a laser beam having a wavenumber-tuned single-mode into three laser beam portions, and simultaneously measuring ① a Doppler-free two-photon absorption spectrum of a dioxins sample, ② a Doppler-free absorption spectrum of an iodine molecule and ③ an etalon mark with thus divided laser beam portions, respectively;
(2) determining absolute wavenumbers of spectrum peaks of the above ② with reference to a Doppler-free absorption spectra data list (published by JSPS, ISBN 4-89114-000-3), taking said absolute wavenumbers as standard ones and determining absolute wavenumbers of spectrum peaks of the above ① from differences in wavenumber from the standard spectrum peaks while the etalon mark in the above ③ is taken as a scale;
(3) measuring Doppler-free two-photon absorption spectra of homologues and isomers of the dioxin and polychlorinated biphenyls (PCBs) to be quantitatively analyzed, at various concentrations by (1) and (2) mentioned above, and preliminarily determining Doppler-free two-photon absorption spectra containing concentration-dependent data as analytical curves with respect to the homologues and isomers of the dioxins;
(4) measuring a Doppler-free two-photon absorption spectrum of a mixed sample of the homologues and isomers of the dioxin to be quantitatively analyzed, by the above method (1);
(5) comparing the thus measured Doppler-free two-photon absorption spectrum of the mixed sample of the homologues and isomers of the dioxin to be quantitatively analyzed, with that as the analytical curve with respect to locations and intensities of spectrum peaks and determining kinds and contents of the homologues and isomers of the dioxin in the mixture.

2. The method for quantitatively measuring dioxin homologues and isomers by laser spectroscopy according to claim 1, wherein an analytical accuracy is improved by effecting energy splitting through applying an external magnetic field and/or an external electric field to the dioxins sample in the above measurement (1).

3. A dioxin homologue and isomer laser spectroscopically quantitatively measuring apparatus comprising;
(a) an optical resonator in which parallel reflecting plates at opposite ends are opposed to each other,
(b) a wavenumber-tunable single-mode laser unit connected to an incident end portion of the optical resonator via a beam splitter and adapted to emit single-mode laser beams of which wavenumbers are continuously changed,
(c) an iodine spectrum measuring unit and (d) an etalon mark-measuring unit connected to said wavenumber-tunable single-mode laser unit via said beam splitter,
(e) a resonator controller connected to an emitting end portion of the optical resonator and adapted to automatically control a length of the resonator so as to satisfy a resonating condition following sweeping of wavenumbers,
(f) an emitted light detector for detecting a light emitted through resonance inside a sample cell placed inside the optical resonator, and
(g) an automatic control measuring unit, said iodine spectrum measuring unit, said etalon mark measuring unit and said optical detector being connected to an input side of the automatic control measuring unit, said wavelength-tunable single-mode laser being connected to an output side of the automatic control measuring unit,
said automatic control measuring unit (i) effecting controlling and wavenumber-sweeping of the wavenumber-tunable single-mode laser, (ii) receiving outputs from said emitted light detector, outputs from said etalon mark measuring unit and outputs from said iodine spectrum-measuring unit, and (iii) measuring and recording ① a Doppler-free two-photon absorption spectrum of each of homologues and isomers of the dioxin to be quantitatively analyzed, which spectrum contains concentration-dependent data as analytical curves obtained by measurement at various concentrations, ② a Doppler-free absorption spectrum of an iodine molecule to be used for determining absolute wavenumbers, and ③ an etalon mark as a scale for measuring relative wavenumbers, (iv) said automatic control measuring unit comparing the thus measured Doppler-free two-photon absorption spectrum of the mixed sample of the homologues and isomers of the dioxin to be quantitatively analyzed, with that as the analytical curve with respect to locations and intensities of spectrum peaks and (v) determining kinds and quantities of the homologues and isomers of the dioxin in the mixture.

4. The dioxin homologue and isomer laser spectrometer according to claim 3, which further comprises an external magnetic field and/or external electric field applying means to apply an external magnetic field and/or external electric field to the dioxins sample in the above measurement (iii) for improving an analytical accuracy by effecting energy splitting.
